Europäisches Patentamt

European Patent Office

Office européen des brevets

(19)

(11) Publication number: **0 370 648**

**A1**

(12) **EUROPEAN PATENT APPLICATION**

(21) Application number: **89311409.0**

(22) Date of filing: **03.11.89**

(51) Int. Cl.5: **B01D 53/34, B01D 50/00**

(30) Priority: **22.11.88 GB 8827236**

(43) Date of publication of application:
**30.05.90 Bulletin 90/22**

(84) Designated Contracting States:
**BE DE ES FR GB IT NL**

(71) Applicant: **UNITED KINGDOM ATOMIC ENERGY AUTHORITY**
**11 Charles II Street**
**London SW1Y 4QP(GB)**

(72) Inventor: **Stairmand, John William**
**81 Egerton Road**
**Blackpool Lancs(GB)**
Inventor: **Green, David**
**7 Longbarn Avenue**
**Bamber Bridge Preston PR5 6XB(GB)**
Inventor: **Singh, Jaswant**
**Wallace Farm Wallace Lane**
**Forton Lancs(GB)**

(74) Representative: **Alderman, John Edward et al**
**United Kingdom Atomic Energy Authority**
**Patents Branch B329 Harwell Laboratory**
**Oxfordshire, OX11 0RA(GB)**

(54) **Separation of gas components.**

(57) A multi-component gas containing a gaseous component to be separated is intimately contacted with a liquid or a slurry to form an aerosol, the liquid/slurry containing a constituent which absorbs the gaseous component. The liquid/slurry in the aerosol is subsequently coalesced by centrifugal force, and the other components of the gas separated from the coalesced liquid/slurry.

EP 0 370 648 A1

## Separation of Gas Components

This invention relates to the separation of one component in the gaseous phase from a multi-component gas. One application of the invention resides in the desulphurisation of flue gases derived from power-generating and other industrial processes.

In recent years there has been increasing concern over the environmental impact of acid rain which has lead to serious consideration being given to achieving reduction in the acidic content of industrial and power station off-gases. In particular, significant reductions in the sulphur dioxide content are sought using a process known as "Flue Gas Desulphurisation" or FGD. In FGD processes currently in use, the sulphur dioxide is absorbed out of the flue gases before they reach the environment by means of relatively inefficient packed columns or spray columns, the highly corrosive nature of the flue gases precluding the use of complex or sophisticated equipment. However, construction of even these simple columns involves considerable capital expenditure - for a typical 1000 MW power station, the capital cost of the necessary spray columns may be of the order of £45 million. A spray column is described in Specification GB-A-1521838.

According to one aspect of the present invention there is provided a method of separating one component in the gaseous phase from a multi-component gas, said method comprising: intimately contacting the gas with a liquid or slurry containing a constituent which absorbs said one component characterised in that contact is effected by using the gas to produce an aerosol of liquid/slurry droplets in the gas; and thereafter subjecting the aerosol to centrifugal force to induce coalescence of the droplets whereby the gas and liquid/slurry can be separated.

In one embodiment of the invention, the gas is used to entrain the liquid/slurry and is then discharged through a nozzle to cause atomisation of the liquid/slurry and produce an aerosol in which efficient mass transfer takes place between the droplets and the gas.

In a second embodiment, the liquid/slurry is introduced into a high velocity stream of the gas, eg as discharged from a nozzle, so that an aerosol is produced.

In another embodiment, the liquid/slurry is caused to spread as a film over a surface upon which the gas impinges, the gas velocity being such that the resulting interaction produces an aerosol.

The gas, in addition to creating the aerosol, is preferably fed at such a rate that the aerosol is conveyed through an elongate contactor chamber at a rate affording a preselected contact time between the droplets and the gas before centrifugal separation occurs.

The method is preferably carried out in a cascade of at least two stages in each of which the liquid/slurry is atomised by the gas and separated centrifugally from the gas, the arrangement being such that the first stage is supplied with gas rich in said first component and liquid/slurry derived from a subsequent stage whilst the final stage is supplied with fresh liquid/slurry and gas depleted in said first component as a result of contact with the liquid/slurry in preceding stages.

From another aspect the invention provides a method of separating one component in the gaseous phase from a multi-component gas, the method comprising, intimately contacting the gas with a liquid or slurry containing a constituent which absorbs said one component, characterised in that contact is effected by using the gas to produce an aerosol of liquid/slurry droplets in the gas; and thereafter subjecting the aerosol to centrifugal force to induce coalescence of the droplets, whereby the gas and liquid/slurry can be separated.

In one form apparatus for separating one component from a multi-component gas comprises a first chamber having an inlet for the gas, an inlet for a liquid or slurry, and an outlet, the said inlets being arranged such that the liquid/slurry inlet is between the gas inlet and the outlet, means for subsecting to centrifugal force the gas/liquid/slurry discharged from the outlet, and a second chamber having an inlet from the centrifugal force means, a gas outlet, and a liquid/slurry outlet.

The invention will now be further described by way of example only with reference to the accompanying drawings, in which:

Figure 1 is a diagrammatic view of one form of apparatus for performing the method of the invention;

Figure 2 is a diagrammatic view of a modification of the apparatus of Figure 1; and

Figure 3 is a diagrammatic view of a cascaded form of the apparatus.

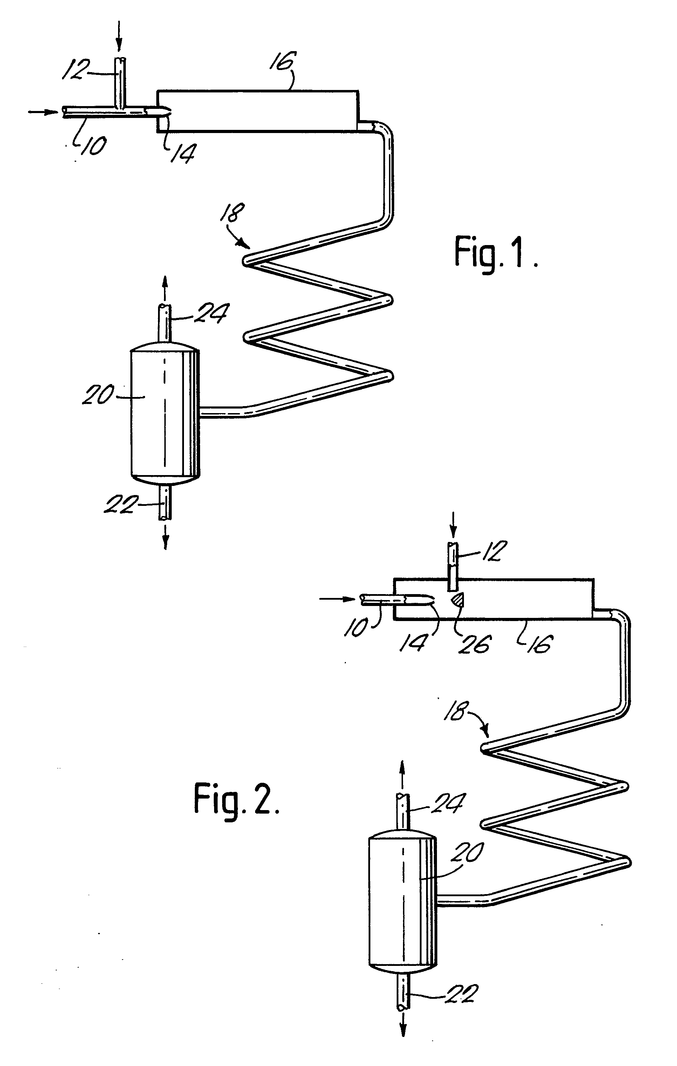

Referring to Figure 1, a multi-component gas such as a flue gas bearing sulphur dioxide is fed at a pressure of the order of 0.5 to 1 bar (gauge) through supply line 10 into which a liquor or slurry is introduced via inlet 12 so that the liquor/slurry is entrained by the gas. The gas and entrained liquor/slurry is discharged via a nozzle 14 into contactor/mixing chamber 16 to produce an aerosol of liquid/slurry droplets in the flowing gas. The liquor/slurry contains a constituent which absorbs, for example by way of a chemical reaction, the sulphur dioxide content of the flue gas. The absorbing constituent may comprise for example sodium sulphite, calcium hydroxide or calcium carbonate.

The arrangement, in terms of the gas flow rate and dimensions of the contactor chamber 16, is such that the flowing aerosol has a residence time within the chamber 16 sufficient to secure effective mass transfer of sulphur dioxide from the flue gas to the absorbing constituent of the liquor/slurry.

From the contactor chamber 16, the aerosol flows into a separating section 18 in which the aerosol is subjected to centrifugal force to induce droplet coalescence and hence separation of the $SO_2$-enriched liquor/slurry phase from the $SO_2$-depleted gas phase. The separating section comprises a coiled tube which leads to a breakpot 20 where the gas and liquor/slurry are finally separated via liquor outlet 22 and gas outlet 24.

The embodiment of Figure 2 is generally the same as that of Figure 1 and like reference numerals are used to identify like parts. In this case, the liquor/slurry is dripped onto a bluff body flow distributor 26 within the contactor chamber 16 so that the liquor/slurry forms a film on that surface of the distributor 26 which faces nozzle 14 through which the flue gas is discharged. The flue gas consequently impinges on the film spread over the distributor 26 thereby atomising the liquor/slurry and transporting the resulting aerosol along the length of the chamber 16 and into the separating section.

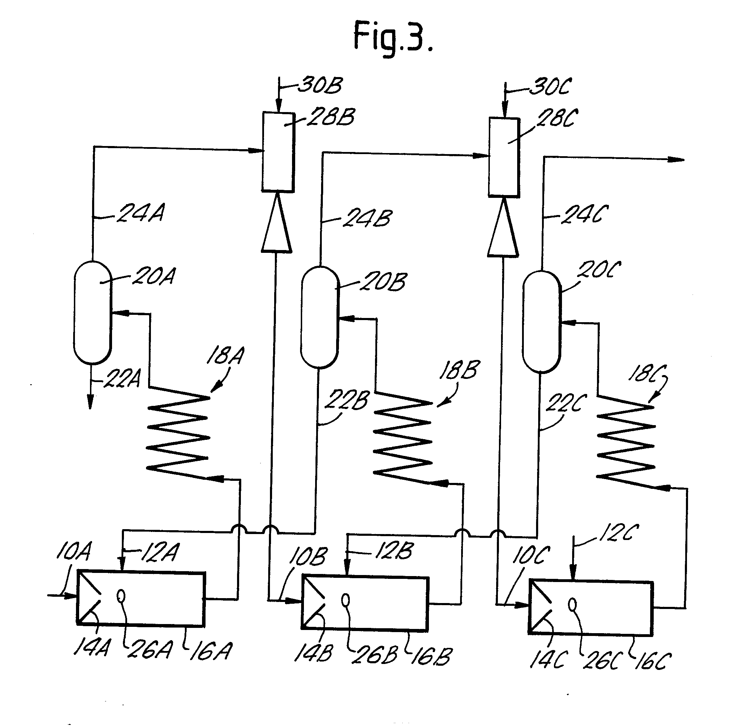

The embodiment of Figure 3 comprises three stages each generally similar to those of Figure 2. The components forming each stage are distinguished from those of the other stages by suffixes A, B and C. $SO_2$-rich flue gas enters the cascade via supply line 10A where, by means of nozzle 14A and distributor 26A, it atomises liquor/slurry derived from the outlet 22B of the breakpot 20B in cascade stage B. The absorbing-constituent of the slurry so derived will, in part, be combined with $SO_2$ as a result of contact with flue gas in cascade stages B and C. The gas-liquid/slurry aerosol passes through the separating coil 18A and into breakpot 20A from which $SO_2$-rich liquor/slurry is obtained at outlet 22A and partially $so_2$-depleted flue gas is obtained at outlet 24A. The latter is fed, with the aid of an ejector 28B having a compressed air supply 30B, to the supply inlet 10B of cascade stage B where the process described above in relation to Figure 1 is repeated, this time using a partially $SO_2$-depleted flue gas from cascade stage B and the partially-reacted absorber derived from outlet 22C of cascade stage C.

In the final stage C, $SO_2$-depleted flue gas from stage B is used to atomise fresh (ie unreacted) absorber-containing liquor/slurry fed to the contactor chamber 16C via inlet 12C. The treated flue gases leave the cascade via outlet 24C with a substantially reduced $SO_2$ content. The spent absorber-containing liquor/slurry leaves the cascade at outlet 22A for subsequent disposal or treatment for the purpose of recycle. It will be appreciated that the number of stages in the cascade may be less than or greater than the three stages illustrated. It will be seen that using a cascaded arrangement, the gas-liquid interfaces produced by atomisation are repeatedly refreshed thereby enhancing mass transfer. This contrasts, with a spray tower where the gas rises through a spray of liquid droplets which descend under gravity at their terminal velocities and tend to coalesce as they descend thereby reducing mass transfer efficiency since the exposed surface area of the liquid as a whole reduces as the droplet size increases. Moreover, there is a limit on the relative velocities that can be achieved between the countercurrent flowing gas and droplets in a spray tower and as droplet size increases total surface area decreases which is disadvantageous from the mass transfer standpoint.

various modifications of the above described apparatus are possible. For example, the coiled tube may be replaced by some other form of centrifugal separator such as a cyclone. Also, the liquor supply may be fed positively by introducing pressurised liquor supplies, eg via an ejector, into the supply lines extending from the break pots to the inlets 12A, 12B.

In one application of the invention, the multi-component gas comprises a power station flue gas containing, as said one component, sulphur dioxide.

The invention also has applications in other situations involving separation of one component of a multi-component gas, for example where said one component is a noxious agent such as an oxide of nitrogen.

The invention also includes a method of separating one component from a multi-component gas, the method comprising, forming an aerosol of the gas and a liquid or a slurry, the liquid/slurry containing a constituent which absorbs said one component, subsequently coalescing the liquid/slurry in the aerosol, and separating the other components of the gas from the coalesced aerosol.

## Claims

1. A method of separating one component in the gaseous phase from a multi-component gas, the method comprising, intimately contacting the gas with a liquid or slurry containing a constituent which absorbs said one component, characterised in that contact is effected by using the gas to produce an aerosol of liquid/slurry droplets in the gas; and thereafter subjecting the aerosol to centrifugal force to induce coalescence of the droplets, whereby the gas and liquid/slurry can be separated.

2. A method as claimed in Claim 1, wherein the gas is used to entrain the liquid/slurry and is then discharged through a nozzle (14) to cause atomisation of the liquid/slurry and produce an aerosol in which efficient mass transfer takes place between the droplets and the gas.

3. A method as claimed in Claim 1, wherein the liquid/slurry is introduced into a high velocity stream of the gas so that an aerosol is produced.

4. A method as claimed in any one of Claims 1 to 3, wherein the liquid/slurry is caused to spread as a film over a surface (26) upon which the gas impinges, the gas velocity being such that the resulting interaction produces an aerosol.

5. A method as claimed in any one of the preceding Claims, wherein the gas is fed at such a rate that the aerosol is conveyed through an elongate contactor chamber (16) at a rate affording a preselected contact time between the droplets and the gas before centrifugal separation occurs.

6. A method as claimed in any one of the preceding Claims, wherein the method is performed in a cascade of at least two stages in each of which stages the liquid/slurry is atomised by the gas and separated centrifugally from the gas, the arrangement being such that the first stage is supplied with gas rich in said first component and liquid/slurry derived from a subsequent stage whilst the final stage is supplied with fresh liquid/slurry and gas depleted in said first component as a result of contact with the liquid/slurry in preceding stages.

7. A method as claimed in any one of the preceding Claims, wherein the multi-component gas comprises an industrial or power station flue gas containing, as said one component, sulphur dioxide.

8. A method as claimed in Claim 7, wherein the liquid comprises, as the absorbing constitutent, an aqueous solution of sodium sulphite or calcium hydroxide.

9. A method as claimed in Claim 7, wherein the liquid comprises a slurry of calcium carbonate as the absorbing constitutent in a suitable solvent.

10. A method as claimed in any one of Claims 1 to 6, wherein the multi-component gas comprises an oxide of nitrogen.

11. A method of separating one component from a multi-component gas, the method comprising, forming an aerosol of the gas and a liquid or a slurry, the liquid/slurry containing a constituent which absorbs said one component, subsequently coalescing the liquid/slurry in the aerosol, and separating the other components of the gas from the coalesced aerosol.

12. A method as claimed in Claim 11, wherein the aerosol is formed by passing the gas on to a thin film of the liquid/slurry.

13. A liquid/slurry containing a component separated from a multi-component gas by the method as claimed in any one of Claims 1 to 11, or Claim 12.

Fig.1.

Fig.2.

# Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 114 477 (F.L. SMIDTH) --- | | B 01 D 53/34 B 01 D 50/00 |
| A | DE-A-2 511 291 (F.M.C. CORP.) --- | | |
| A | FR-A-2 152 815 (HITACHI LTD) ----- | | |

TECHNICAL FIELDS
SEARCHED (Int. Cl.5)

B 01 D

The present search report has been drawn up for all claims

| Place of search | Date of completion of the search | Examiner |
|---|---|---|
| THE HAGUE | 15-02-1990 | BOGAERTS M.L.M. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
....................................................................
& : member of the same patent family, corresponding
  document

EPO FORM 1503 03.82 (P0401)